# EUROPEAN PATENT APPLICATION

(11) **EP 2 565 836 A1**
(43) Date of publication of application: **06.03.2013**
(21) Application number: 12182557.4
(22) Date of filing: 31.08.2012
(51) Int. Cl.: G06Q 30/00

(54) **Advertisement booking and media management for digital displays**

(30) Priority: 01.09.2011 US 201161530345 P; 01.09.2011 US 201161530354 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The invention relates to a system for remote management and display of advertisements, comprising: a processing unit configured to manage a plurality of advertisements; one or more clients connected to the processing unit, configured to send booking requests to the processing unit to book one or more of said plurality of advertisements; a data link coupled to the processing unit, configured to transport advertisements automatically selected by the processing unit based on the booking requests; one or more display units coupled to the data link, configured to display advertisements transported via said data link; and a distribution channel for broadcasting of a live recording of at least one of the one or more display units to an audience.

## Description

### FIELD OF THE INVENTION

The present invention relates generally to remote management and display of advertisements and, more particularly, to advertisement booking and media management for digital displays managed by a processing unit, which automatically selects advertisements based on booking requests provided by remote clients.

### BACKGROUND

In typical advertising approaches, an advertiser books advertisements at an advertising agency. The advertisements are thereafter processed and displayed as printed or digital matters on billboards in selected locations, such as in streets, at stations, other public places, venues of live events, and others. Even though automated techniques for digital processing of advertisements that do not require printed or physical copies of advertisements have been proposed, the whole processing is highly standardized and divided into separate processing stages, such as creating, handling, planning, and display of advertisements. It is therefore often difficult for the advertiser or even the advertising agency to change already processed booking requests or to modify the particular advertisement in a short period of time. Also, since in traditional advertising approaches advertisers typically book advertisements for several locations, it is difficult for an advertising agency to change the bookings on the fly or to react on modifications of the booking requests on short notice.

However, from the point of view of an advertiser it would be desirable to decide on the right advertisement for a particular event instantaneously, e.g., when the event starts or while the event is running.

In view of the above, one object of the present invention is to improve the response time of an advertising system and to allow for a more dynamic management and placement of advertisements.

The problem is solved by the system for remote management and display of advertisements and the method for remote management and display of advertisements as defined in the independent claims. Preferred embodiments of the inventive approach are defined in the corresponding dependent claims.

A system for remote management and display of advertisements according to the present invention comprises a processing unit configured to manage a plurality of advertisements; one or more clients connected to the processing unit, configured to send booking requests to the processing unit to book one or more of said plurality of advertisements; a data link coupled to the processing unit, configured to transport advertisements automatically selected by the processing unit based on the booking requests; one or more display units coupled to the data link, configured to display advertisements transported via said data link; and a distribution channel for broadcasting of a live recording of at least one of the one or more display units.

The inventive system is a distributed system comprising a plurality of components, such as clients, processing units, display units and others, interconnected via several communication links. For instance, the one or more clients are connected to the processing unit via a suitable connection, such as any type of a network. Furthermore, the one or more display units are connected to the processing unit via the data link, which may also be any type of a network suitable to transport the selected advertisements to at least one of the one or more display units. Eventually, at least one of the one or more display units is being recorded and said live recording is being broadcasted via the distribution channel. Thus, the system is capable of managing and processing advertisements instantaneously, irrespective of the installation site of the components of the system, for example, different locations for each component or the same locations for a group of components.

In the inventive system the one or more clients send booking requests in order to book a desired advertisement for display on at least one of the one or more display units. Preferably, a booking request comprises an identification of the desired advertisement, an identification of a desired location specifying at least one of the one or more display units, presentation characteristics, and timing data for the desired advertisement. A client may be any computing device capable of connecting to the processing unit via the connection and capable of communicating with said processing unit by sending booking requests.

The processing unit may collect the booking requests as well as further incoming data from the one or more clients and may further include a memory configured to store the booking requests and the incoming data. Preferably, the booking requests are processed according to a set of rules, such as pre defined rules provided by a provider of the system. The processing unit automatically selects the advertisements for display on at least one of the one or more display units based on the received booking requests and sends the selected advertisements via the data link to the respective display units. For example, a booking request may specify a single one, a group, or a range of the one or more display units. The booking request may also specify a particular venue or location to display the booked advertisement and the processing unit may match the specification of the location to one or more of said one or more display units. In order to manage the plurality of advertisement, the processing unit may be linked to a data store or a data base storing details about advertisements available for display. The advertisements may be uploaded previously by the one or more clients or a third party advertisement provider. An advertisement may also be uploaded in connection with the actual booking request sent by a client. Also, the actual data of an advertisement need not be stored or buffered at the processing unit and may be directly provided to the processing unit or the booked display unit via the processing unit after a successful booking. In this case, the processing unit may only store identification data of the advertisement and may request the advertisement data after the advertisement has been selected.

The data link may be any connection capable of connecting the processing unit with one or more display units and capable of transporting advertisement data from the processing unit to the respective display units. The data link may comprise a plurality of direct, bi directional connections between the processing unit and each one of the one or more display units, or may comprise a single bus like communication connection, wherein the data sent over said communication connection may be received by each one of the one or more display units. Preferably, a display unit may include a controller configured to read advertisement data sent over the connection to the one or more display units. The controller may check if the corresponding display unit is the addressee of the transported advertisement data. Incase the advertisement data is to be displayed on said display unit, the controller may pass the advertisement data to the display unit for further processing.

The inventive system also comprises a distribution channel for broadcasting of the live recording of at least one of the one or more display units to the audience. The recording, broadcasting, and distribution may correspond to a typical television broadcasting processing. However, the system is not limited to a particular type of broadcasting technique. For example, the live recording may be transferred via the Internet or another suitable connection if the event and the audience are not part of a typical television broadcasting chain. Thus, the distribution channel may be a television broadcasting channel, or a network broadcasting the live recording, or both. The audience may include an unrestricted group of viewers or a limited number of spectators. The audience may also include the one or more clients.

An advertiser or an advertisement agency can place its advertisement via said one or more clients based on several conditions. An advertiser may buy advertisement space by booking an advertisement of said plurality of advertisements for display during a particular live event in advance. The advertiser may also book the advertisement while the live event is already running and up to the moment the advertisement is to be displayed. An advertisement can be booked for a specific time, such as a starting time or a time duration. The display of advertisements may also be triggered by an event. Thus, the advertisement is displayed if a certain event happens, e.g., when a certain condition is being met at a live event, and does not necessarily need to be linked to a particular time.

The inventive system enables advertisers or advertising agencies to book advertisements for display to an audience from a remote location in a direct way. Therefore, advertisement agencies can display advertisements and decide what advertisements to show instantly or within a short period of time. The advertiser may also observe the broadcasted live recording in order to receive immediate feedback and to observe the effects of the displayed advertisements on potential observers. Thus, the advertisers may immediately react on the displayed advertisement and may modify, change or cancel the displayed content. In this respect, the system provides a communication channel between a client and a booked target display unit. Therefore, the inventive system is highly flexible and dynamic with regard to booking of advertisements and flexible in terms of remote booking and monitoring of the displayed advertisements.

In a preferred embodiment of the present invention, the processing unit includes a scheduler configured to schedule the selected advertisements for display on at least one of the one or more display units. The scheduler may manage a data structure comprising entries for each one of said one or more display units indicating the availability and already booked time slots for each display unit. When a client books an advertisement, the scheduler may determine the duration of the advertisement either by extracting a time length for presentation of the advertisement from the corresponding booking request or by determining a length of the booked advertisement, such as a length of a video advertisement or a duration of a sound file. The scheduler may thereafter check if the booked display units are available at the specified time for said duration. If the booked display units are available, the scheduler generates an entry for the booked time and duration in order to block the desired display units for presentation. Preferably, the scheduler may also comprise a timing module which sends the selected advertisements over the data link to the booked display units when the time conditions are being met or immediately at a certain time duration before the display time is being reached. The scheduler may also immediately send all booked and scheduled advertisements to the respective booked display units, in which case, the one or more display units are configured to receive the selected advertisements, buffer the selected advertisements, and display the advertisements when the timing conditions are being met. The scheduler may also comprise a controller module which receives data about events occurring in the environments of the booked display units. If a selected advertisement is to be displayed when a certain event occurs and if the controller module receives data about said event, the scheduler may immediately transfer the advertisements to the respective display units. The scheduler may also directly transfer an event triggered advertisement to the respective display units, in which case, the display units preferably comprise a controller module responsive to events occurring in their direct environment.

According to another preferred embodiment of the present invention, said processing unit includes a queue coupled to the scheduler to buffer the scheduled advertisement. If two or more clients attempt to book advertisements for one display unit in the same time slot, the scheduler may accept the booking request of the first client and reject any further booking requests. Preferably, the processing unit or the scheduler may also accept all booking requests for said display unit and time slot and may push the advertisements into the queue such that all advertisements will be displayed one after the other at the display unit according to an order, for example, based on an incoming time stamp of each one of the booking requests. If queues are to be used, the advertiser may also specify in the booking request that advertisements are to be displayed simultaneously on a plurality of display units. Thus, the processing unit or the scheduler may include further timing restrictions for display of a particular advertisement on a plurality of display units. In order to prevent idle time of the one or more display units caused by such additional timing constraints, the scheduler may optimize the available time slots and may privilege an advertisement in the queue over another advertisement which is to be displayed simultaneously and would therefore cause some of the booked display units to be idle. However, the scheduler may also work on a strictly first come, first served basis. Furthermore, the scheduler may configure the queue to start at a specific time and may start pushing subsequent advertisements into the queue starting at this specific time.

In a particularly preferred embodiment of the present invention, said processing unit includes a monitor showing the queue of scheduled advertisements to the one or more clients. Said monitor may provide access to a list of entries, each representing a scheduled advertisement. An entry may comprise information related to the advertisement, such as an advertisement identification, advertiser data, scheduled time and duration, and an identification of the booked display units for said advertisement. Said monitor may also provide access to a plurality of lists having entries, each list being associated with a display unit, wherein the entries of a list only relate to advertisements of the corresponding display unit. The monitor may be used by the advertisers to obtain an immediate feedback about booked and placed advertisements. Preferably, the advertisers may activate, deactivate, choose, or switch scheduled advertisements. Preferably, an advertiser may only modify advertisements that he has previously booked. In other words, clients may not be allowed to modify any scheduled advertisements of other clients. All modifications concerning the scheduled advertisements are directly sent to the processing unit and preferably processed by the scheduler in order to optimize the allocation of time slots to the one or more display units with regard to timing and other control constraints. Since the one or more clients are capable of observing the scheduled advertisements and since the one or more clients may influence or even cancel the placement of certain advertisements, the inventive system is highly dynamic and reactive with regard to current conditions and changes.

According to another preferred embodiment of the present invention, said plurality of advertisements comprise advertisement data, including one or more of audio data, video data, computer graphics data, text and voice messages, interactive components, and identification data of data sources. The processing unit may be coupled to an advertisement server configured to store the advertisements and the advertisement data. In order to enable an instantaneous booking of the advertisements, the advertisement data is preferably transferred to the processing unit or, optionally, to the advertisement server, well in advance of the actual booking. Preferably, the one or more clients may be configured to upload the advertisement data to the processing unit or the advertisement server. Also, the advertisement data may be provided by a third party advertisement provider. Furthermore, the advertisement data may also be transferred to the processing unit in connection with the actual booking request. In such case, the processing unit preferably stores the booking request in a memory and the advertisement data in a temporal buffer or on the advertisement server. The processing unit may immediately process the booking request and may schedule the booked advertisement for display on the booked display units at the specified time. Once the advertisement data is available at the processing unit, the processing unit may analyze and check the advertisement data and may also process the data, if a particular display unit requires a specific data type or format for display, such as resizing, resampling, and transforming of audio and/or video data.

The advertisement data may also comprise computer graphics data, such as any three dimensional graphical representations of objects that may, for example, be arranged within a scene graph in combination with data indicating the behavior or a story line for these objects. The processing unit may, for example, render the scene graph and the story line and buffer the results for display. Furthermore, the advertisement data may comprise text and voice messages or any other type of a message generated, for example, on a portable device, such as a mobile phone, smartphone, or a portable computer. The portable device may connect to the processing unit as one of said one or more clients and send the messages in combination with a booking request to the processing unit, for example, via the Short Message Service (SMS), the Multimedia Messaging Service (MMS), or any other suitable communication protocol. The advertisement data may also comprise interactive components which enable spectators directly observing the displayed advertisement on the one or more display units or the audience receiving the broadcasted live recording to interact with the advertisement. The advertisement data may also include any identification data of a data source, such as links to external data sources and other repositories that are configured to deliver advertisement content upon request. For example, a client may specify its IP address or an IP address of a server as data source.

In a further preferred embodiment of the present invention, said one or more clients are configured to register a data stream at the processing unit to provide an advertisement stream for display on the one or more display units. In order to register the data stream, the client may previously upload an address or identification of the data stream to the processing unit where it may be stored as advertisement data, e.g., as an identification data of a data source. However, the client may also send a booking request comprising the identification of the data stream. If a data stream is registered and booked and if the scheduler selects the respective data stream for display on one or more of the one or more display units, the processing unit may directly pass the data stream identifier to the booked display units and trigger the source, for example, the client itself, to start streaming the advertisement. Thus, it is not only possible to activate already uploaded advertisements, such as audio and video data, but also to stream video or media content live and directly to the booked display units. In addition, the processing unit may further process the data stream, e.g., by checking the availability of the live data stream and by checking the compatibility of the data stream with the booked display units in order to ensure an error free processing.

According to another preferred embodiment of the present invention, said advertisements displayed on the one or more display units are interactive advertisements. Preferably, spectators locally observing the interactive advertisement at a display unit are invited to interact with the interactive advertisement to participate in, e.g., a live event. Based on the interaction, the advertisers or advertising agency may dynamically react to the action of the spectators and may change or update the displayed advertisements. Preferably, not only said spectators locally present at the display unit but also the audience of the broadcasting, which may be remotely connected to the interactive advertisement, may participate in the live event and may also naturally react to the live event and the interactive advertisements. Since the advertisers may change advertisements dynamically, they can react to the actions of the spectators and the audience. In the case of interactive advertisements, the system may further comprise one or more input devices installed in connection with the one or more display units, which are configured to receive input from the local spectators or linked to the distribution channel in order to receive input from the remote audience. Preferably, an input device may receive an input from the audience or spectators and transfer the input data via the data link to the processing unit. The processing unit may process the data or directly deliver the data to a client, for example, a client of said one or more clients, previously registered for interaction at the particular display unit, or a client associated with said interactive advertisement, e.g., the client that provided the booking request for said interactive advertisement. The input device may be any kind of device capable of providing feedback from spectators or an audience, such as microphones, tracker devices, cameras, gesture recognition devices, touch screens, pointing devices, and others.

In yet another preferred embodiment of the present invention, said processing unit includes an auction system, wherein said one or more clients are configured to place a bid for a place and time of advertisement on the one or more display units by sending the booking request including the bid. Thus, advertisers or advertising agencies may use one of said clients to auction a certain time and space, i.e., one or more of said one or more display units. Preferably, advertisement time and space can be auctioned to the highest bid, be this before the event starts or just before advertisement is actually displayed. Each auction can be specifically held for available advertisement time slots. An auction can cover one or more actual advertisement slots, which may be fixed in the schedule or flexible for the bid to be placed later. The system may also allow for a combination of an auction of advertisement time slots and providing certain advertisement space without an auction. Thus, certain advertisement space can also be booked for a fixed price by a first purchaser without an auction taking place by accepting the offer, e.g., as an instant purchase. The auction system is preferably configured to dynamically switch between an auction and said instant purchase, thus allowing the provider of the inventive system to maximize the profit by activating an auction in case of increasing prices or by selling the advertisement space and time directly for a more competitive price in case of decreasing demand.

According to another preferred embodiment of the present invention, the processing unit comprises a renderer configured to render each booked advertisement in a format and quality specified by the booking request. Preferably, the renderer renders each selected advertisement according to a quality level specified by the booking request. Preferably, the renderer receives the advertisement data of the respective booked advertisements and generates a data stream transferred via the data link to the one or more booked display units. However, the renderer may also pre process the advertisement data and store the results in the processing unit or an advertisement server for later display if said advertisement is booked. The renderer may, for example, be configured to process all incoming advertisement data into a format compatible with the one or more display units. The renderer may also generate a plurality of format versions of each provided advertisement according to different formats of said one or more display units. For example, one of said display units may provide sound only and another one only video with a certain resolution and frame rate. Furthermore, the renderer may also comprise a computer graphics renderer to process computer graphics data of an advertisement in order to provide the results as a video stream to the booked display units. The renderer may also process text or voice messages and generate a presentable format for the display on the respective display unit.

In a particularly preferred embodiment of the present invention, the one or more display units are installed at a venue of a live event. The live event may be any typical live event which may be broadcasted, such as a sports match, a concert, a television show, a political speech, a party, a conference, or the like.

In a further particularly preferred embodiment of the present invention, the one or more display units are billboards within a CGI movie. CGI (computer generated imagery) generally refers to the application of 3D computer graphics in movies, television programs, or advertisements. Thus, the one or more display units may be represented as software modules within a computer generated image, which may be directly broadcasted through the distribution channel to the audience. Said display units may also deliver computer generated images which are used to augment real video data, for example, by continuously embedding the images into frames of said real video.

Furthermore, a method for remote management and display of advertisements according to the present invention comprises the steps of managing a plurality of advertisements by a processing unit, sending booking requests by one or more clients to book one or more of said plurality of advertisements, automatically selecting advertisements by the processing unit based on the booking requests, transporting the selected advertisements to one or more display units, displaying the transported advertisements on at least one of the one or more display units, and broadcasting a live recording of at least one of the one or more display units to an audience. The inventive method allows for a dynamic booking of advertisements managed on a processing unit, which is configured to automatically select advertisements to be displayed based on the received booking requests and transport the selected advertisements to one or more display units, thus allowing for an instantaneous booking and display of advertisements. Moreover, the inventive method allows an advertiser to evaluate the effects and results of the displayed advertisement by observing the broadcasted live recording. Therefore, the advertiser has full control over the displayed advertisements.

According to a preferred embodiment of the present invention, the method further comprises scheduling the selected advertisements for display on at least one of the one or more display units.

In a further preferred embodiment of the present invention, said method further comprises buffering the selected advertisements in a queue.

In yet another preferred embodiment of the present invention, the method further comprises providing access to a monitor showing the queue of scheduled advertisements to the one or more clients. Said providing access may comprise providing access to one or more lists with entries, each entry being related to a selected advertisement. Each client may register at said processing unit in order to access the one or more lists. After registration, the monitor may send the lists and all related data to the client. Preferably, the monitor sends updates of the lists if new advertisements have been selected.

In yet another preferred embodiment of the present invention, the method further comprises at least one of activating, deactivating, choosing, and switching said scheduled advertisements by one of said one or more clients. Preferably, the state of a selected advertisement may only be modified by the booking client, i.e., by the client which sent the booking request for the related advertisement. However, the system may also assign priority levels to each client, in which case, a client with a higher priority may, for example, outperform another client with a low or lower priority, for example, by switching its own advertisement with the advertisement of the lower prioritized client.

In yet another preferred embodiment of the present invention, the method comprises triggering said display of advertisements by an event. Preferably, said triggering may comprise registering an event at the location of a display unit and transferring the event data to the processing unit or to the respective display unit. The processing unit or the display unit may evaluate the event data and check if an event triggered advertisement is registered for said kind of event. Thereafter, the processing unit may immediately start to transfer the related advertisement data to the display unit. Also, the processing unit may transfer an event triggered advertisement to the booked display unit immediately after the advertisement has been booked and selected. Thus, if the event triggered advertisement is already present at the display unit, for example, buffered in a memory of the display unit, the display unit may immediately start to display the advertisement if the corresponding event has been registered. The events may be any kind of previously defined circumstances or situations, such as a particular achievement, scores or penalties in a sports match, arrival of trains or other public transportation at a station, and others.

According to another preferred embodiment of the present invention, the method further comprises uploading advertisement data of one of the plurality of advertisements to the processing unit by one of the one or more clients. Preferably, the advertisement data includes at least one of audio data, video data, computer graphics data, other media data and media files, text and voice messages, and interactive components.

In a particularly preferred embodiment, the method further comprises registering a data stream at the processing unit by one of the one or more clients to provide an advertisement stream for display. Preferably, the client may upload identification data of the source of said data stream to the processing unit. If the streamed advertisement is booked and selected, the processing unit may request the streaming of said advertisement. Preferably, the data stream may be directly provided to the booked display units via the processing unit.

In yet another preferred embodiment of the present invention, the method further comprises interacting with advertisements displayed on the one or more display units. Said interacting may comprise receiving an input by spectators at a display unit showing the interactive advertisement or by the remote audience processing the input and updating the displayed interactive advertisement.

In yet another preferred embodiment of the present invention, the method further comprises placing a bid for a place and time of advertisement by sending the booking request including the bid.

According to another preferred embodiment of the present invention, the method further comprises rendering each booked advertisement in a format and quality specified by the booking request. Said rendering may also be performed immediately after the advertisement data has been received from the one or more clients. The advertisement data may be rendered in a plurality of pre defined formats and quality levels which may also depend on the characteristics of the display units. The rendered results may be stored at the processing unit or in an associated data store. Said rendering may also be performed on the fly after selection of a booked advertisement.

In yet another preferred embodiment of the present invention, said advertisements are displayed at the venue of a live event.

In a particularly preferred embodiment, said advertisements are displayed as billboards within a CGI movie.

Furthermore, a computer readable medium according to the present invention has instructions stored thereon, said instructions, when installed and executed on a computing device, causing said computing device to perform a method according to the present invention.

### DESCRIPTION OF THE DRAWINGS

Further details and characteristics of the present invention are described in exemplifying embodiments of the invention with reference to the figures of the accompanying drawings, in which:
- Fig. 1: shows a schematic illustration of a system according to an embodiment of the present invention;
- Fig. 2: shows a schematic illustration of a system according to another embodiment of the present invention, wherein said display units are embedded in a CGI environment; and
- Fig. 3: shows a flowchart of a method according to an embodiment of the present invention.

### DETAILED DESCRIPTION

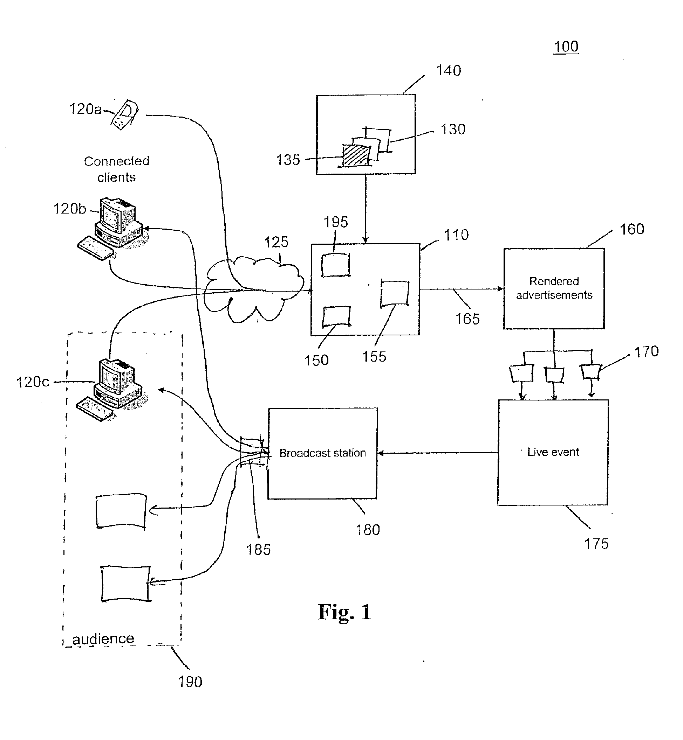

Fig. 1 shows a schematic illustration of an exemplifying embodiment of a system 100 according to an embodiment of the present invention enabling remote management and display of advertisements. The system 100 comprises a processing unit 110 to which clients 120a, 120b, 120c may connect via a connection 125. The clients 120a, 120b, 120c may be any general purpose computers, handheld or portable devices, laptops, personal digital assistants, tablet PCs, smartphones or mobile phones, to name a few. For example, client 120a may be a mobile phone or a smartphone and clients 120b, 120c may be suitable personal computers or portable devices. Also, the connection 125 may be any kind of a suitable network type, such as any local area network or a wide area network, e.g., the Internet, a phone line, a wireless network, a mobile network, and others.

The processing unit 110 is configured to manage a plurality of advertisements 130, which may be stored in a memory of the processing unit 110 or in an associated data store, such as an advertisement server 140. The clients 120a, 120b, 120c may send booking requests to the processing unit 110 in order to book an advertisement 135 of the plurality of advertisements 130. The processing unit 110 may comprise a scheduler 150 and a renderer 155. The scheduler 150 may process booking requests received by the processing unit 110 from said clients 120a, 120b, 120c and schedule the available time and space based on the received booking requests. For example, the booked advertisement 135 may be automatically selected by the processing unit 110. In this case, the renderer 155 receives the advertisement data of the selected advertisement 135 and renders the advertisement data according to a quality and format specified in the booking request into a rendered advertisement 160. The rendered advertisement 160 may be pushed into a queue of rendered advertisements and transferred via a data link 165 to one or more display units 170. The data link 165 may be any kind of connection suitable to transport advertisement data from the processing unit 110 to one or more of said one or more display units 170, such as a wired connection, a wireless connection, a direct connection between the processing unit 110 and each of said one or more display units 170, or a bus like connection interlinking the processing unit 110 with the one or more display units 170.

In the exemplifying embodiment, the display units 170 are located at the venue of a live event 175. For example, the system 100 may be set up for a sports event, such as a football match. Before the live event 175 starts, clients 120a, 120b, 120c may upload their advertisements 130 to the processing unit 110 or the advertisement server 140 and send booking request for a particular time during the match and space, i.e., one or more of said display units 170. Preferably, the clients 120a, 120b, 120c may send the booking requests before the live event 175 starts. In this case, the scheduler 150 of the processing unit 110 may already select the booked advertisements and push the selected advertisements 145 into the queue including a timing constraint according to the booked time. However, the clients 120a, 120b, 120c may also book advertisements while the live event 175 is taking place, in which case the processing unit 110 and its scheduler 150 automatically select advertisements booked for available time and space instantaneously. If the selected advertisements are buffered at the processing unit 110 in the queue, the processing unit 110 may start transferring the advertisement data to the booked display units 170 at the booked time. However, if the selected advertisements are already previously transferred to the booked display units 170, the booked display units 170 themselves may start the received advertisements at the booked time.

Preferably, the live event 175 is recorded live and broadcasted by a broadcast station 180 via a distribution channel 185 to an audience 190, which may also comprise the client 120c or further clients connected to the processing unit 110. However, the clients 120a, 120b, 120c need not be part of the audience 190. For example, client 120a may be a direct spectator of the live event 175.

The live recording, and broadcasting may be a usual television broadcasting, wherein the live event 175 and preferably at least some of the display units 170 are recorded by a plurality of cameras, the recorded signals are processed in a control room, and the generated television signal is broadcasted to the audience 190. However, the system 100 is not limited to a particular broadcasting processing or type and may, for example, comprise broadcasting via the Internet.

After the start of the live event 175, e.g., the football match, the processing unit 110 may also activate an auction system 195, which allows placement of bids for the screen time during the match. The price for a time slot may be dynamically adjusted by the processing unit 110. For example, if a relatively small number of advertisements is being booked, the initial price can drop. However, if a certain event during the match occurs, e.g., a goal is scored, the price for advertisement space and time may increase. The clients 120a, 120b, 120c may thus observe the live event 175 and may immediately bid for a screen time if the event occurs.

The system 100 may also allow for sending text messages for display on the display units 170, such as a score board, displayed, e.g., as a perimeter advertising, or sending sounds, which are thereafter displayed by the audio system in the stadium. For example, client 120a may be a mobile device connected to the processing unit 110. Client 120a may be configured to simultaneously send the text message with the booking request to the processing unit 110 in order to book the text message for display on one of the display units 150. The mobile phone of client 120a may be operated by a spectator of the live event 175. Therefore, the text message may be created instantly as a reaction to the ongoing match.

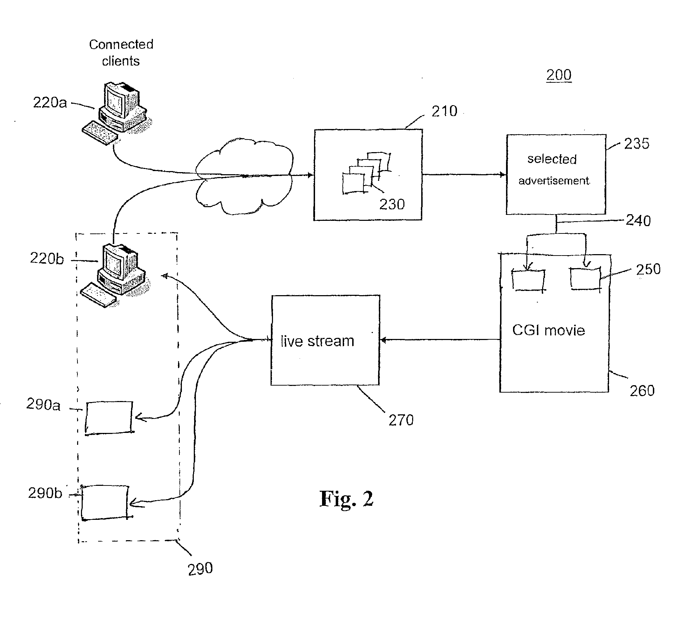

Fig. 2 shows a system 200 according to another exemplifying embodiment of the present invention. The system 200 may comprise a processing unit 210 and one or more connected clients 220a, 220b. The clients 220a, 220b may book advertisements 230 by sending booking requests to the processing unit 210. The processing unit 210 may automatically select an advertisement 235 based on the booking requests and the availability of time and space. The selected advertisement 235 is transported via data link 240 to one or more display units, which may be represented as billboards 250 within a computer-generated or augmented environment, such as a CGI movie 260. The CGI movie 260 may be broadcasted via a live stream 270 to an audience 290.

The audience 290 may comprise one or more of said connected clients 220a, 220b as well as other consumers connecting to the live stream 270 of the CGI movie 260 from consumer devices 290a, 290b, such as a home entertainment system, e.g., a game console, a mobile device, a TV set, or the like. In particular, the CGI movie 260 may be interactive. The consumers 290a, 290b may, for example, change the course of the movie 260 while watching.

Clients 220a, 220b may purchase advertisement space inside the movie 280, e.g., by booking a particular billboard 250 within the movie 280. For example, client 220a, 220b may book one of the advertisements 230, which may comprise an image, in order to decorate the billboard 250 with the image of the booked advertisement. Once the processing unit 210 has selected and transferred the advertisement 235 to the booked billboards 250, the billboards 250 are rendered in real time within the CGI movie 260 with the image of the advertisement 235. It is to be understood, that advertisements 230 are not limited to images only and may comprise any audio and/or visual data as well as computer graphics data and others. Also said advertisements 230 may comprise interactive components and consumers 290a, 290b may interact with the interactive components of said advertisements 230 if displayed within the CGI movie 260 and streamed to the consumer devices 290a, 290b.

The clients 220a, 220b may also purchase advertisement space for display of one of the advertisements 230, which may completely interrupt the rendered CGI movie 260. In this case, the advertisement 235 may be displayed in full screen via the live stream 270 to the audience 290 similar to a conventional advertisement break.

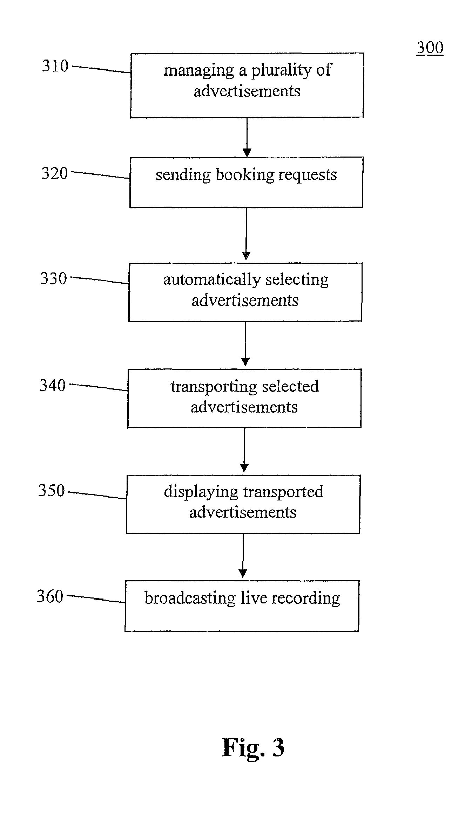

Fig. 3 shows a flow chart of a method 300 according to an exemplifying embodiment of the present invention. The method 300 may start by managing 310 a plurality of advertisements by a processing unit and sending 320 booking requests by one or more clients to book one or more of said plurality of advertisements, managed 310 by the processing unit. The processing unit may automatically select 330 advertisement space on the booking requests and transport 340 the selected advertisement to one or more display units that have been booked by the corresponding booking request. The booked display units are preferably configured to display 350 the transported advertisements to spectators of, e.g., a live event which, in combination with at least one of the one or more display units, is live recorded and broadcasted 360 to an audience. A client may form part of the spectators of the live event or belong to the audience in order to observe the effects of the displayed advertisements. However, a client may also be used to only book advertisements by sending 320 booking requests and needs not to be part of the spectators or the audience. Preferably, the clients may observe the current state of the booked advertisements selected by the processing unit and may send 320 new booking requests or may update, change, or modify the already selected advertisements.

It is to be understood that many modifications may be provided to the exemplifying embodiments of the invention without leaving the scope of the invention. Also, the inventive method may be represented by a computer readable medium having instructions stored thereon or by a signal transporting said instructions. Furthermore, the invention may be practiced within the scope of the claims differently from the examples described and the described features and characteristics may be of importance for the invention in any combination.

## Claims

1. A system for remote management and display of advertisements, comprising:
a processing unit configured to manage a plurality of advertisements;
one or more clients connected to the processing unit, configured to send booking requests to the processing unit to book one or more of said plurality of advertisements;
a data link coupled to the processing unit, configured to transport advertisements automatically selected by the processing unit based on the booking requests;
one or more display units coupled to the data link, configured to display advertisements transported via said data link; and
a distribution channel for broadcasting of a live recording of at least one of the one or more display units to an audience.

2. The system of claim 1, wherein the processing unit includes a scheduler configured to schedule the selected advertisements for display on at least one of the one or more display units, and a queue coupled to the scheduler to buffer the scheduled advertisements.

3. The system of claim 2, wherein said processing unit includes a monitor showing the queue of scheduled advertisements to the one or more clients.

4. The system according to one of the preceding claims, wherein said one or more clients are configured to register a data stream at the processing unit to provide an advertisement stream for display on the one or more display units.

5. The system according to one of the preceding claims, wherein said advertisements displayed on the one or more display units are interactive advertisements.

6. The system according to one of the preceding claims, wherein the processing unit comprises a renderer configured to render each booked advertisement in a format and quality specified by the booking request.

7. The system according to one of the preceding claims, wherein the one or more display units are installed at a venue of a live event, or wherein the one or more display units are billboards within a CGI movie.

8. A method for remote management and display of advertisements, comprising:
managing a plurality of advertisements by a processing unit;
sending booking requests by one or more clients to book one or more of said plurality of advertisements;
automatically selecting advertisements by the processing unit based on the booking requests;
transporting the selected advertisements to one or more display units;
displaying the transported advertisements on at least one of the one or more display units; and
broadcasting a live recording of at least one of the one or more display units to an audience.

9. The method of claim 8, further comprising scheduling the selected advertisements for display on at least one of the one or more display units, and buffering the scheduled advertisements in a queue.

10. The method of claim 9, further comprising providing access to a monitor showing the queue of scheduled advertisements to the one or more clients.

11. The method according to one of the claims 8 to 10, further comprising triggering said display of advertisements by an event.

12. The method according to one of the claims 8 to 11, further comprising uploading advertisement data of one of the plurality of advertisements to the processing unit by one of the one or more clients.

13. The method according to one of the claims 8 to 12, further comprising registering a data stream at the processing unit by one of the one or more clients to provide an advertisement stream for display.

14. The method according to one of the claims 8 to 13, further comprising interacting with advertisements displayed on the one or more display units.

15. The method according to one of the claims 8 to 14, further comprising rendering each booked advertisement in a format and quality specified by the booking request.
